# EUROPEAN PATENT SPECIFICATION

(11) **EP 0 484 040 B1**
(45) Date of publication and mention of the grant of the patent: **14.01.1998**
(21) Application number: 91309791.1
(22) Date of filing: 23.10.1991
(51) Int. Cl.: C08G 61/02

(54) **Process of preparing a phenolic polymer**
Verfahren zur Herstellung von phenolischen Polymeren
Procédé de préparation de polymères phénoliques

(30) Priority: 31.10.1990 JP 291872/90; 31.10.1990 JP 291873/90; 26.12.1990 JP 406453/90
(43) Date of publication of application: 06.05.1992
(73) Proprietor: MITSUI TOATSU CHEMICALS, Inc., Chiyoda-Ku Tokyo 100 (JP)
(72) Inventor: Yamaguchi, Keizaburo, Chiba-ken, 299-31 (JP); Urakami, Tatsuhiro, Yokohama-shi, Kanagawa-ken 240 (JP); Yamaguchi, Akihiro, Kanagawa-ken 248 (JP)
(74) Representative: Harvey, David Gareth

(56) References cited:
- EP-A- 0 102 313
- EP-A- 0 249 415
- EP-A- 0 370 305
- DE-B- 1 495 985
- FR-A- 539 494
- US-A- 3 419 624
- US-A- 4 390 680

## Description

The present invention relates to a process for preparing a polymer derived from phenol compounds, and to the polymer per se. Such phenolic polymer can be utilized as a thermosetting resin by using a crosslinking agent such as hexamethylenetetramine and also utilized for a raw material and a curing agent of epoxy resins. Particularly in recent years, application to a sealing compound for semiconductors has been expected.

Preparation processes of phenolic polymers have been conventionally described in (A) Japanese Patent Publication SHO 41-14099(1966), (B) Japanese Laid-Open Patent SHO 47-35000(1972), (C) Japanese Laid-Open Patent SHO 61-168624(1986), (D) Japanese Laid-Open Patent SHO 63-99224(1988), (E) Japanese Laid-Open Patent SHO 62-4720(1987), (F) Japanese Laid-Open Patent SHO 62-257924(1987), (G) USP 3,336,398, (H) USP 3,536,734 and (I) J. Japan Petrol. Inst., vol. 27, No. 3, 207-213(1984)

The above known processes are roughly classified into the group of (B), (G) and (I), and the group (A), (C), (D), (E), (F) and (H).

The former group is a process for reacting at a temperature of 200°C or more without a catalyst in an autoclave. The process has to carry out the reaction at increased pressure at a high temperature and hence leads to cost increases in terms of equipment and energy. The reaction at the high temperature generates side reactions such as cleavage of a raw material dicyclopentadiene or homopolymerization without a phenol compound and leads to problems of lowering the proportion of a desired alternating copolymer as described in Tsuchiya et al., J. Japan Petrol. Inst., vol. 27, No. 3, 207-209(1984)

The latter group is a process which uses a Friedel-Crafts catalyst such as Lewis acid. The process is disclosed for preparing the alternating copolymer as a main product.

The most preferable catalyst for the reaction is a boron trifluoride catalyst. The catalyst used in any of the known techniques is chiefly boron trifluoride and its complex. A disadvantage of the boron trifluoride catalyst, however, is that the catalyst develops highly corrosive materials in the presence of moisture or as a result of decomposition by heating, and thus common materials cannot be used for the reaction. Another disadvantage which is common with other Lewis acid catalysts is to provide a polymer containing a residual catalyst and its decomposition product which cause serious problems in the field of semiconductor sealing compounds.

In the known techniques, Japanese Laid-Open Patent SHO 63-99224(1988) (D) proposes a method for adding a solvent to the reaction mixture and washing with a large amount of water in order to eliminate the above problems. The washing method, however, must remove unreacted phenol together with the catalyst. It is thus required to carry out solvent recovery and additionally to dispose, in a pollution free manner, of waste water which contains a large amount of the phenol compound.

Consequently, the process of using a Lewis acid catalyst which is represented by the known boron trifluoride has many problems on the quality of resultant polymer and preparation procedures, and is now very difficult to use in industry.

An object of the invention is to provide a resin containing as a primary component an alternating copolymer which can be utilized in the field of epoxy resin and semiconductor sealing compounds.

The present invention seeks to provide a preparation process which yields a good quality of the resultant polymer and which causes no significant problem in the reactor.

As a result of carrying out an intensive investigation in order to accomplish these objectives, the present inventors have completed the invention.

According to one aspect, the invention is a preparation process of a phenolic polymer comprising reacting a phenol compound with dicyclopentadiene in the presence of a perfluoroalkanesulfonic acid catalyst represented by the formula (I):

CₙF₂ₙ₊₁SO₃H (I)

wherein n is an integer of from 1 to 8.

The invention also provides a process of preparing a phenolic polymer comprising reacting a phenol compound with dicyclopentadiene in the presence of a perfluoroalkanesulfonic acid ion exchange resin.

According to the process of the invention, the resulting phenolic polymer has excellent quality and contains substantially no ionic impurities accompanied by the residual catalyst component which has conventionally caused problems. The process of the invention also eliminates problems of corrosion of the materials of the production equipment, enables repeated use of the catalyst, and can produce phenolic polymers useful in industry.

The invention will now be explained in more detail by way of example only in the following non-limitative description.

The catalyst used in the invention is perfluoroalkanesulfonic acid, perfluoroalkanesulfonic acid type ion exchange resin.

These catalysts and the method of use will be illustrated hereinafter, respectively.

### (1) Perfluoroalkanesulfonic acid is represented by the formula (I):

CₙF₂ₙ₊₁SO₃H (I)

wherein n is an integer of from 1 to 8 and includes, for example,
trifluoromethanesulfonic acid (CF₃SO₃H),
pentafluoroethanesulfonic acid (C₂F₅SO₃H),
heptafluoropropanesulfonic acid (C₃F₇SO₃H),
nonafluorobutanesulfonic acid (C₄F₉SO₃H),
undecafluoropentanesulfonic acid (C₅F₁₁SO₃H),
tridecafluorohexanesulfonic acid (C₆F₁₃SO₃H),
pentadecafluoroheptanesulfonic acid (C₇F₁₅SO₃H), and
heptadecafluorooctanesulfonic acid (C₈F₁₇SO₃H).
Trifluoromethanesulfonic acid is preferred in industry.

Perfluoroalkanesulfonic acid is generally classified as a super strong acid as described in Kobayashi; J.Synthetic Organic Chemistry Japan, Vol. 33, No. 11, 861-862(1975). For example, acid strength (H₀ ) of trifluoromethanesulfonic acid is 427 times the strength of nitric acid and much stronger than that of sulfuric acid which has 30 times the strength of nitric acid.

Consequently, these catalysts are used in a very small amount in the process of the invention. The amount is generally in the range of 0.001 to 1.0 % by weight, preferably 0.01 to 0.25 % by weight for the total materials. Such a very small amount of the catalyst causes almost no problem, even if retained in the polymer. In addition, trifluoromethanesulfonic acid has a generally lower boiling point as compared with the boiling point of raw material phenol, and can be simultaneously removed in distilling off the unreacted raw material. Thus-recovered trifluoromethanesulfonic acid has an advantage that it can be reused in combination with the recovered phenolic compound.

When the ionic impurities in the phenolic polymer obtained lead to more serious problems, unreacted raw materials are distilled off in vacuum, the residue is dissolved in solvent, the resulting solution is washed with water and separated, and successively the solvent is distilled off to obtain purified polymer. Alternatively, the very small amount of acid materials retained in the phenolic polymer are neutralized with oxide, carbonate or hydroxide of alkali earth metals such as barium, magnesium and calcium. The compounds which can be used for the neutralization includes, for example, calcium oxide, magnesium oxide, barium oxide, calcium carbonate, magnesium carbonate, barium carbonate, magnesium hydroxide and barium hydroxide. Barium compound is preferred for using the resultant polymer in semiconductor sealing and barium carbonate and barium hydroxide are preferred in particular. The amount of these neutralizing agents is an equivalent or less of the catalyst used for the reaction. However, most of the catalyst is recovered and hence the amount of the neutralizing agents used is about one fifth equivalent for the catalyst.

The reactors which can be applied to the process using the catalyst include glass reactors, glass lined reactors and other reactors composed of general purpose materials such as SUS 304 and SUS 316. This is a great advantage of the invention because conventional boron trifluoride catalyst cannot be used for any reactor material due to severe corrosion.

In order to carry out the process of the invention in industry, the following corrosion tests were conducted on SUS materials.
○ Test material : SUS 304 test piece
SUS 316 test piece
○ Immersion bath :
A reaction mixture obtained by reacting 100 g of phenol with 28.2 g of dicyclopentadiene in the presence of 0.128 g of trifluoromethanesulfonic acid.
○ Testing condition : 170°C × 120 hours
○ Results :

| | Weight loss (%) | Corrosion rate(mm/year) |
|---|---|---|
| SUS 304 | 0.045 | 0.026 |
| SUS 316 | 0.048 | 0.028 |

According to the test results, corrosion rate per year is at a low level of 0.026 to 0.028 mm in spite of a severe condition of 170 °C and the surface condition of the test pieces is also good after finishing the test. It is thought that these materials can be used in the process of the invention.

### (2) Another catalyst perfluoroalkanesulfonic acid type ion exchange resin is represented by the formula (II):

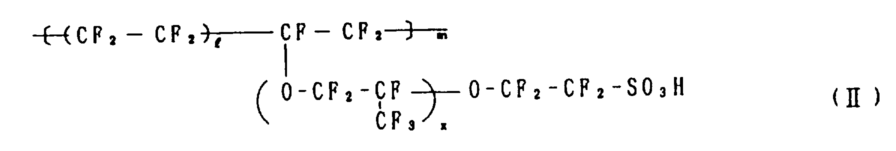

wherein ℓ is from 5 to 13.5, m is about 1000, and x is an integer of 1 or more. The catalyst is known as a super strongly acidic ion exchange resin and marketed with a trade mark Nafion from E. I. Du'pont de Nemours &. Co. The ion exchange resin is available in the form of powder, granule, net and film. Any type of the resin can be used for the invention.

When the ion exchange resin is used for the catalyst, the catalyst can be separated with ease from the reaction system. For example, the most typical separation method such as filtration can be applied. The ion exchange resin in the form of a film, granule or net can also be used for the catalyst as a part of the reaction equipment. Consequently, the catalyst can be used repeatedly.

Further, the polymer prepared by using the ion exchange resin as the catalyst has no problem at all on the quality due to the catalyst component as found in the polymer obtained by conventional processes. That is, a polymer having good quality can be obtained without contamination of ionic impurities. The process is suitable for industry because of no problem on the reactor materials or waste water treatment.

The process for using the catalyst can be carried out batch wise or continuously. The amount of the catalyst is generally 5 % by weight or more for the total weight of the raw materials. In the batch process, the catalyst is often used'in the range of 5 to 200 % by weight, preferably 10 to 100 % by weight.

The phenol compounds used in the process of the invention are monovalent or divalent phenols, bisphenol and trisphenol, and include, for example, phenol, o-cresol, m-cresol, p-cresol, o-ethylphenol, p-ethylphenol, o-isopropylphenol, p-n-propylphenol, p-sec-butylphenol, p-cyclohexylphenol, p-chlorophenol, o-bromophenol, p-bromophenol, resorcinol, catechol, hydroquinone, 2,2-bis(4-hydroxyphenyl)propane, 4,4'-thiodiphenol, dihydroxydiphenylmethane, and trishydroxyphenylmethane. The phenol compounds are not limited to these compounds.

The amount of the above phenol compounds is in the range of from 1 to 20 moles, preferably from 1.3 to 10 moles per mole of dicyclopentadiene.

The reaction is usually carried out by heat-polymerizing without a solvent. However, solvents which are inert for the reaction can be used. Useful solvents include, for example, aromatic hydrocarbons such as benzene, toluene and xylene; and halogenated hydrocarbons such as 1,2-dichloroethane, 1,1,2-trichloroethane and monochlorobenzene.

The reaction temperature is in the range of from 20 to 200 °C, preferably from 40 to 160 °C. The reaction time is from 2 to 50 hours.

The embodiments of the reaction in the process of the invention are generally a method for charging the whole materials including the catalyst at one time and heating the resulting mixture as intact to the prescribed reaction temperature, and preferably a method for progressing the reaction at the prescribed temperature while dropwise adding dicyclopentadiene to the phenol compound containing the catalyst. The progress of the reaction can be inspected by high performance liquid chromatography.

After finishing the reaction, the desired product is obtained with a method which is well suited for the catalyst used and the catalyst can also be recovered.

For example, when perfluorosulfonic acid is used for the catalyst, unreacted raw materials and the catalyst are recovered by vacuum distillation after finishing the reaction and thereafter the residue is discharged as such to obtain the polymer. Alternatively, the residue is dissolved in toluene or methyl isobutyl ketone, washed with water, and followed by distilling off the solvent to obtain the polymer.

When the perfluoroalkanesulfonic acid type ion exchange resin is used for the catalyst, the catalyst is separated by filtration after finishing the reaction and unreacted raw materials are recovered by vacuum distillation to obtain the desired phenolic polymer.

The present invention will hereinafter be illustrated further in detail by way of examples.

### Example 1

To a glass reaction vessel equipped with a thermometer and stirrer, 1645 g (17.5 moles) of phenol and 1 g of the catalyst trifluoromethanesulfonic acid were charged and heated to 120 °C with stirring. Successively 463 g (3.5 moles) of dicyclopentadiene was added dropwise over 5 hours at the same temperature. After finishing the dropwise addition, the reaction mixture was aged for 5 hours at the same temperature. After finishing the reaction, the viscous reaction mixture was heated to 160 °C under vacuum to recover unreacted raw materials by distillation, thereafter immediately discharged, and allowed to cool. The dark red polymer block thus obtained was a copolymer of phenol and dicyclopentadiene.

According to GPC analysis, the copolymer was represented by the formula (III):

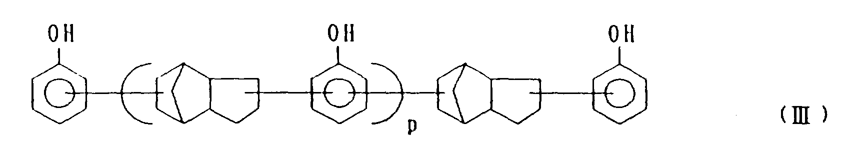

The composition (Area %) of the copolymer was as follows.

| | |
|---|---|
| Phenol | 0.3 % |
| P = 0 | 47.2 % |
| P = 1 | 27.0 % |
| P = 2 | 14.6 % |
| P ≧ 3 | 10.9 % |

The yield was 1003 g. Softening point was 103 °C by the ring and ball method according to JIS K-2548. Hydroxyl equivalent was 174.7 g/eq. The reactor had suffered no change by visual inspection.

### Example 2

To a glass reaction vessel, 270 g (2.5 moles) of p-cresol and 0.5 g of pentafluoroethanesulfonic acid catalyst were charged, heated to 90 °C with stirring and maintained at the same temperature. Successively, 132.2 g (1 mole) of dicyclopentadiene was added dropwise to the mixture over 4 hours. After finishing dropwise addition, the reaction mixture was aged for 5 hours in a temperature range of 90 to 100 °C . After finishing the reaction, the viscous reaction mixture was heated to 160 °C under vacuum to distill off unreacted p-cresol and other raw materials. The residue was mixed with 500 g of toluene to obtain an uniform solution and 500 g of water was added to the solution. The mixture thus obtained was heated to reflux for an hour and allowed to cool to separate into two layers. The lower aqueous layer was removed and toluene was distilled off under vacuum from the upper layer. The residue was immediately discharged and allowed to cool. A block of brown polymer was obtained. The yield was 280 g. Softening point was 128°C.

According to GPC analysis as Example 1, the copolymer was represented by the formula (IV): 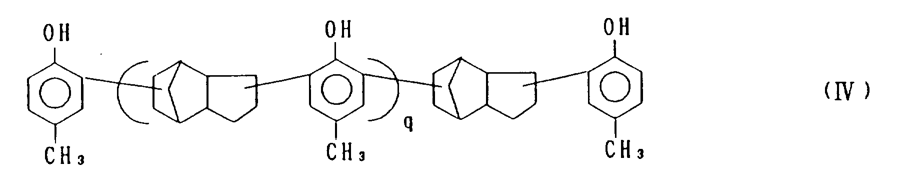 The composition (Area %) of the copolymer was as follows.

| | |
|---|---|
| q = 0 | 31.5 % |
| q = 1 | 23.0 % |
| q = 2 | 15.6 % |
| q = 3 | 12.2 % |
| q ≧ 4 | 17.7 % |

Hydroxyl equivalent was 205 g/eq. Separated aqueous layer was pH 6.1. The reactor had suffered no change by visual inspection.

### Comparative Example 1

To a glass reactor, 470 g (5 moles) of phenol and 11.5 g of phenol/boron trifluoride complex containing 26 % of boron trifluoride were charged and heated to 90 °C with stirring. Successively, 132 g of dicyclopentadiene was added dropwise over 4 hours at the temperature of 90 to 100 °C . After finishing dropwise addition, the reaction mixture was aged for 5 hours to complete the reaction. Thereafter, a viscous reaction mixture thus obtained was treated as per Example 1 to recover unreacted phenol. At the end of distillation, white fume was evolved from the residue. The residue was dissolved in toluene as Example 2, washed with water and the aqueous layer was separated. The aqueous layer was pH 3.2. Slight corrosion was found on a part of the reactor.

### Example 3

To a 50 ℓ SUS 304 reactor, 28.2 kg (300 moles) of phenol and 25 g of trifluoromethanesulfonic acid catalyst were charged and maintained at 42 °C. Successively, 4.95 kg (37.5 moles) of dicyclopentadiene was added dropwise through a dropping device with stirring over 2.5 hours.

After finishing dropwise addition, the mixture was stirred at 50 °C for 2 hours and successively heated and maintained at 120°C . The mixture was aged for 2 hours at the same temperature and further heated to 150 °C. The mixture was aged for 3 hours at the temperature. After finishing the reaction, unreacted raw materials and catalyst component were recovered from the reaction mixture by using Smith thin film distillation equipment to obtain 11.1 kg of phenol copolymer represented by the formula (III) in Example 1.

According to GPC, the composition (Area %) was as follows.

| | |
|---|---|
| Phenol | trace |
| p = 0 | 67.7 % |
| p = 1 | 21.4 % |
| p = 2 | 7.2 % |
| p ≧ 4 | 3.7 % |

Softening point was 92 °C and hydroxyl equivalent was 170 g/eq.

Heavy metal content of the phenol copolymer obtained by atomic absorption analysis was 2.6 ppm in Fe, 1 ppm or less in Ni, 1 ppm or less in Cr, and 1 ppm or less in Mn.

Electric conductivity of extracted water was measured by extracting 30 g of the resin with 300 mℓ of distilled water at 95 °C for 20 hours. Conductivity of the supernatant liquid was measured with a conductivity tester (Horiba Seisakusho, Model DS-8M).

Conductivity of the extracted water was 9.2 µs/cm.

### Example 4

To a glass reaction vessel, 470 g (5 moles) of phenol which was recovered in Example 3 and contained catalyst component was charged and 132 g (1 mole) of dicyclopentadiene was reacted by the same procedures as carried out in Example 1.

After finishing the reaction, unreacted phenol and the catalyst were recovered by distillation. A suspension containing 0.1 g of barium carbonate in 5 g of water was added to the molten residue obtained above. Thereafter the mixture was aged for an hour while removing volatile materials again under reduced pressure and discharged.

The yield was 284 g, softening point was 103.5°C, and hydroxyl equivalent was 173 g/eq. Conductivity of extracted water was 2.1 µ s/cm.

### Example 5

To a glass reaction vessel equipped with a thermometer and stirrer, 56.4 g (0.6 mole) of phenol and 16.9 g of perfluoroalkanesulfonic acid type ion exchange resin(Nafion NR-50; Trade mark of E. I. Du'pont de Nemours & Co.) were charged. Successively, the mixture was heated to 90°C with stirring and 26.44 g (0.2 mole) of dicyclopentadiene was added dropwise with stirring over 4.5 hours. After finishing the dropwise addition, the mixture was aged for 25 hours at 135 °C to complete the reaction. The reaction mixture was immediately hot filtered at the same temperature to recover the catalyst Nafion. The filtrate was vacuum distilled as intact to recover unreacted phenol. The residue was hot discharged and allowed to cool to obtain brown polymer.

The yield was 53.5 g. The polymer had a softening point of 93 °C by a ring and ball method according to JIS K-2548. The polymer was a copolymer of phenol and dicyclopentadiene represented by the above formula (III ). According to GPC analysis, the composition (Area %) of the copolymer had following numbers of recurring units p in the formula (III ).

| | |
|---|---|
| Phenol | 0.5 % |
| p = 0 | 67.4 % |
| p = 1 | 20.2 % |
| p ≧ 2 | 11.9 % |

The copolymer had a hydroxyl equivalent of 174 g/eq.

The reaction vessel after the reaction had suffered no corrosion by visual inspection.

### Example 6

The perfluoroalkanesulfonic acid type ion exchange resin which was recovered in Example 5 was used as intact and the reaction was carried out again. The same procedures as described in Example 5 were carried out except that aging was conducted for 28 hours.

The yield was 57.8 g. The polymer had a softening point of 92 °C. According to GPC analysis as Example 5, the composition (Area %) of the polymer was as follows.

| | |
|---|---|
| Phenol | 0.5 % |
| p = 0 | 64.9 % |
| p = 1 | 21.2 % |
| p ≧ 2 | 13.4 % |

The polymer had a hydroxyl equivalent of 176.5 g/eq.

The reaction vessel after the reaction had suffered no corrosion by visual inspection.

### Example 7

The same reaction and post treatment procedures as described in Example 5 were carried out except that phenol was replaced by 64.8 g (0.6 mole) of p-cresol. The polymer represented by the formula (IV) was obtained.

The yield was 56.5s g. The polymer had a softening point of 95 °C and a hydroxyl equivalent of 178 g/eq. According to GPC analysis, the polymer had following composition (Area %).

| | |
|---|---|
| p-cresol | 0.2 % |
| q = 0 | 56.3 % |
| q = 1 | 27.7 % |
| q ≧ 2 | 15.8 % |

The reaction vessel after the reaction had suffered no corrosion by visual inspection.

## Claims

1. A process of preparing a phenolic polymer comprising reacting a phenol compound with dicyclopentadiene in the presence of a perfluoroalkanesulfonic acid catalyst represented by the formula (I):
CₙF₂ₙ₊₁SO₃H (I)
wherein n is an integer of from 1 to 8.

2. A process according to claim 1, wherein the catalyst is a perfluoroalkanesulfonic acid ion exchange resin.

3. The process according to claim 1, wherein perfluoroalkanesulfonic acid is trifluoromethanesulfonic acid.

4. The process according to claim 1 or claim 2, wherein the mole ratio of the phenol compound to dicyclopentadiene is from 1:1 to 20:1.

5. The process according to claim 1, wherein the perfluoroalkanesulfonic acid catalyst is recovered by distillation together with any unreacted phenol compound.

6. The process according to claim 1, wherein the phenol compound and the perfluoroalkanesulfonic acid catalyst contain a recovered phenol compound and a recovered perfluoroalkanesulfonic acid catalyst.

7. The process according to claim 1, wherein an unreacted phenol compound and the perfluoroalkanesulfonic acid catalyst are recovered by distillation, and thereafter the phenolic polymer obtained is washed with water, and/or thereafter a very small amount of acidic impurities remaining in the phenolic polymer is neutralized with an alkali earth metal compound such as barium hydroxide or barium carbonate.

8. The process according to claim 2, wherein the perfluoroalkanesulfonic acid type ion exchange resin is represented by the formula (II): 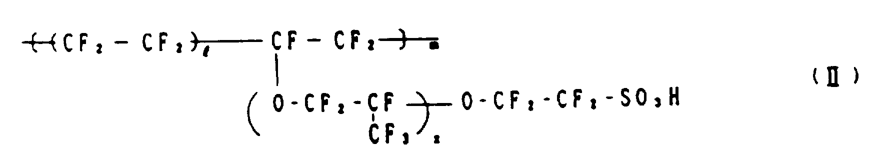 wherein ℓ is from 5 to 13.5, m is about 1000 and x is an integer of 1 or more.

## Patentansprüche

1. Verfahren zur Herstellung eines phenolischen Polymers umfassend die Umsetzung einer Phenol-Verbindung mit Dicyclopentadien in Gegenwart eines Perfluoralkansulfonsäure-Katalysators der Formel (I):
CₙF₂ₙ₊₁SO₃H , (I)
worin n eine ganze Zahl von 1 bis 8 ist.

2. Verfahren nach Anspruch 1, wobei der Katalysator ein Perfluoralkansulfonsäure-Ionenaustauscherharz ist.

3. Verfahren nach Anspruch 1, wobei die Perfluoralkansulfonsäure Trifluormethansulfonsäure ist.

4. Verfahren nach Anspruch 1 oder Anspruch 2, wobei das molare Verhältnis von Phenol-Verbindung zu Cyclopentadien 1 : 1 bis 20 : 1 beträgt.

5. Verfahren nach Anspruch 1, wobei der Perfluoralkansulfonsäure-Katalysator zusammen mit unreagierter Phenol-Verbindung durch Destillation zurückgewonnen wird.

6. Verfahren nach Anspruch 1, wobei die Phenol-Verbindung und der Perfluoralkansulfonsäure-Katalysator eine zurückgewonnene Phenol-Verbindung und einen zurückgewonnenen Perfluoralkansulfonsäure-Katalysator enthält.

7. Verfahren nach Anspruch 1, wobei eine unreagierte Phenol-Verbindung und der Perfluoralkansulfonsäure-Katalysator durch Destillation zurückgewonnen werden und wonach das erhaltene phenolische Polymer mit Wasser gewaschen wird, und/oder wonach ein sehr kleiner Gehalt an sauren Verunreinigungen, die im phenolischen Polymer zurückgeblieben sind, mit einer Erdalkalimetall-Verbindung wie Bariumhydroxid oder Bariumcarbonat neutralisiert wird.

8. Verfahren nach Anspruch 2, wobei das Ionenaustauscherharz vom Perfluoralkansulfonsäure-Typ durch die Formel (II) wiedergegeben wird: 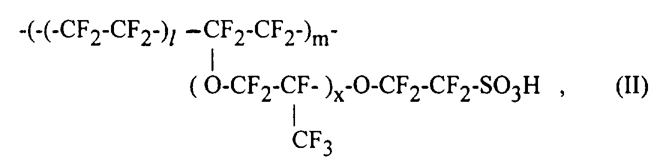 worin ℓ 5 bis 13,5 , m etwa 1000 und x eine ganze Zahl von 1 oder größer ist.

## Revendications

1. Procédé de préparation d'un polymère phénolique comprenant la réaction d'un composé de type phénol avec le dicyclopentadiène en présence d'un catalyseur de type acide perfluoroalcanesulfonique représenté par la formule (I) :
CₙF₂ₙ₊₁SO₃H (I)
dans laquelle n est un entier variant de 1 à 8.

2. Procédé selon la revendication 1, dans lequel le catalyseur est une résine échangeuse d'ions de type acide perfluoroalcanesulfonique.

3. Procédé selon la revendication 1, dans lequel l'acide perfluoroalcanesulfonique est l'acide trifluorométhanesulfonique.

4. Procédé selon la revendication 1 ou la revendication 2, dans lequel le rapport molaire du composé de type phénol au dicyclopentadiène est de 1:1 à 20:1.

5. Procédé selon la revendication 1, dans lequel le catalyseur de type acide perfluoroalcanesulfonique est récupéré par distillation avec tout composé de type phénol non réagi.

6. Procédé selon la revendication 1, dans lequel le composé de type phénol et le catalyseur de type acide perfluoroalcanesulsonique contiennent un composé de type phénol récupéré et un catalyseur du type acide perfluoroalcanesulfonique récupéré.

7. Procédé selon la revendication 1, dans lequel un composé de type phénol non réagi et le catalyseur de type acide perfluoroalcanesulfonique sont récupère par distillation, puis le polymère phénolique obtenu est lavé avec de l'eau, et/ou une très petite quantité d'impuretés acides restant dans le polymère phénolique est ensuite neutralisée avec un composé à base d'un métal alcalino-terreux tel que l'hydroxyde de baryum ou le carbonate de baryum.

8. Procédé selon la revendication 2, dans lequel la résine échangeuse d'ions de type acide perfluoroalcanesulsonique est représentée par la formule (II) : 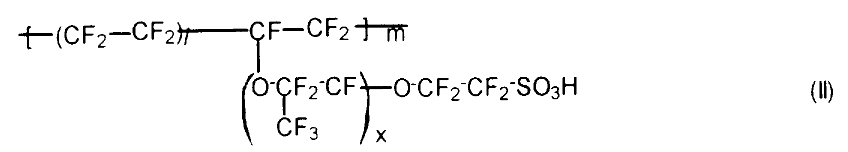 dans laquelle ℓ varie entre 5 et 13,5, m est environ 1000 et x est un entier égal à 1 ou plus.
